# EUROPÄISCHE PATENTANMELDUNG

(11) **EP 3 627 202 A1**
(43) Veröffentlichungstag der Anmeldung: **25.03.2020**
(21) Anmeldenummer: 19198093.7
(22) Anmeldetag: 18.09.2019
(51) Int. Cl.: G02B 6/44, H02G 3/08, H02G 3/10, H02G 3/14, H02G 11/00

(54) **GLASFASERANSCHLUSSDOSE**

(30) Priorität: 21.09.2018 CH 11472018
(71) Anmelder: Zidatech AG, 4614 Hägendorf (CH)
(72) Erfinder: Wacker, Alfred, 5707 Seengen (CH)
(74) Vertreter: Keller & Partner Patentanwälte AG

(57) **Zusammenfassung**

Bei einer Glasfaseranschlussdose (1) für eine Wandmontage an einem Wandmontageplatz (2) in einem Gebäude, ist vorgesehen, dass die Glasfaseranschlussdose (1) ein dem Wandmontageplatz (2) zugewandtes Gehäuseteil (3) und eine Gehäuseabdeckung (4a, 4b, 4c, 4d) umfasst, wobei erste Befestigungsmittel (5) vorgesehen sind, mit welchen ersten Befestigungsmitteln (5) das Gehäuseteil (3) mit der Gehäuseabdeckung (4a, 4b , 4c, 4d) verschliessbar ist, dadurch gekennzeichnet, dass die geschlossene Glasfaseranschlussdose (1) durch den Gehäuseteil (3) und durch die Gehäuseabdeckung (4a, 4b, 4c, 4d) mit einem zweiten Befestigungsmittel (6) von der dem Wandmontageplatz (2) abgewandten Seite der Glasfaseranschlussdose (1) an diesem Wandmontageplatz (2) angeordnet ist.

## Beschreibung

### Technisches Gebiet

Die vorliegende Erfindung fällt in das technische Gebiet der Haushaltsanschlusstechnik; sie betrifft eine Glasfaseranschlussdose für eine Wandmontage an einem Wandmontageplatz in einem Gebäude gemäss dem Oberbegriff des Patentanspruchs 1.

### Stand der Technik

Glasfaseranschlussdosen für eine Wandmontage an einem Wandmontageplatz eines Gebäudes umfassen bekanntermassen einen Gehäuseteil und eine Gehäuseabdeckung, wobei solche Glasfaseranschlussdosen mittels einer Schraube von aussen -also von der dem Wandmontageplatz abgewandten Seite der Glasfaseranschlussdose- durch die Gehäuseabdeckung und durch den Gehäuseteil an dem Wandmontageplatz angeordnet sind. Bei einer Variante solcher Glasfaseranschlussdosen werden die Schrauben unmittelbar mit einem Dübel am Wandmontageplatz verschraubt; bei einer anderen Variante wird zunächst am Wandmontageplatz ein Befestigungsrahmen angeordnet -zumeist ebenfalls mittels einer Schrauben-Dübel-Verbindung- und anschliessend die Glasfaseranschlussdose mit einer Schraube durch die Gehäuseabdeckung und den Gehäuseteil an einem Gewinde des Befestigungsrahmens verschraubt. Eine derartige Glasfaseranschlussdose ist beispielsweise bekannt aus der EP 2 230 738 A2.

Diesen konventionellen Glasfaseranschlussdosen ist gemeinsam, dass sie gleichzeitig mit einer Schraube verschlossen werden und an dem Wandmontageplatz fixiert werden, womit diese Schraube eine Doppelfunktion ausübt. Allerdings kann eine solche Installation dann problematisch sein, wenn zum Beispiel der Wandmontageplatz bei einer Erstinstallation nicht frei und einfach zugänglich ist und somit kein hinreichend grosser Arbeitsraum für einen Handwerker zur Verfügung steht. In einem solchen Fall könnte der bei einer Installation regelmässig offenliegende Inhalt der Glasfaseranschlussdose Schaden erleiden, indem beispielsweise innen liegende Glasfaserkabel geknickt oder gar zerbrochen werden. Ferner kann es auch einer späteren, temporären Demontage der Glasfaseranschlussdose während deren Installationsdauer bedürfen, dann nämlich, wenn der sie tragende Wandmontageplatz einer handwerklichen Bearbeitung bedarf. Im Eintrittsfall wird dann die eine verschliessende und am Wandmontageplatz fixierende Schraube gelöst, womit sich die Glasfaseranschlussdose zum einen öffnet und sich zudem im Radius einer Glasfaserkabelreserve von dem Wandmontageplatz distanzieren lässt. Eine Bearbeitung des Wandmontageplatzes ist dann durch einen Handwerker - beispielsweise ein Gipser oder ein Maler- zwar einfach möglich, allerdings hängt die Glasfaseranschlussdose derweil an der Glasfaserkabelreserve und ist überdies ungeschützt offen. Es ist dabei als bekannt vorauszusetzen, dass jeder Inhalt einer Glasfaserdose hinsichtlich Verschmutzung und Beschädigungen weitaus empfindlicher ist als beispielsweise der Inhalt einer rein elektrischen Hausanschlussdose in Form einer Netzsteckdose oder eines Lichtschalters. Bei jeder ersten Installation und jeder weiteren, späteren Wiederinstallation der Glasfaseranschlussdose lauern darum immer die Gefahren der Verschmutzung oder Beschädigung deren Inhalts.

Es ist deshalb Aufgabe der vorliegenden Erfindung, eine Glasfaseranschlussdose dahingehend weiterzubilden, dass sie zum einen einfacher installierbar ist und zudem ihr Inhalt während jeder Installation in der gesamten Installationszeit -auch bei Demontagen und Wiedermontage- vor Verschmutzung und Beschädigungen geschützt ist.

### Darstellung der Erfindung

Die der Erfindung für Glasfaseranschlussdosen zugrunde liegende Aufgabe wird gelöst durch die Merkmale des Anspruchs 1; die diesen Erfindungsgedanken weiterbildenden Merkmale sind jeweils Gegenstand der Unteransprüche 2 bis 12.

Der Kern der vorliegenden Erfindung für eine Glasfaseranschlussdose für eine Wandmontage an einem Wandmontageplatz in einem Gebäude ist darin zu sehen, dass sie ein dem Wandmontageplatz zugewandtes Gehäuseteil und eine Gehäuseabdeckung umfasst, wobei erste Befestigungsmittel vorgesehen sind, mit denen das Gehäuseteil mit der Gehäuseabdeckung verschliessbar ist, und wobei die geschlossene Glasfaseranschlussdose durch den Gehäuseteil und durch die Gehäuseabdeckung mit einem zweiten Befestigungsmittel von der dem Wandmontageplatz abgewandten Seite der Glasfaseranschlussdose an diesem Wandmontageplatz angeordnet ist. Daraus ergibt sich eine freie Zugänglichkeit der zweiten Befestigungsmittel für die Fixierung an dem Wandmontageplatz von aussen an der Glasfaseranschlussdose her.

Ein wesentlicher Vorteil der erfindungsgemässen Glasfaseranschlussdose ist darin zu sehen, dass sie vor einer Fixierung an dem Wandmontageplatz vollständig verschlossen werden kann und während der Fixierung an dem Wandmontageplatz somit der Inhalt der Glasfaseranschlussdose vollständig vor Verschmutzung und Beschädigung geschützt ist.

Ein weiterer Vorteil ergibt sich aus dem Abdecken der ersten Befestigungsmittel mit einer Beschriftungseinrichtung. Hierdurch werden die ersten Befestigungsmittel vor einem möglichen Eingriff durch Dritte -wie Handwerker zu Beispiel- versteckt, so dass im Bedarfsfall lediglich das frei sichtbare, zweite Befestigungsmittel zur Demontage der verschlossenen Glasfaseranschlussdose von dem Wandmontageplatz spontan in Angriff genommen wird.

Vorteilhaft ist ferner, dass eine solche Beschriftungseinheit, umfassend ein Fensterelement, welches ein Beschriftungselement mit der Glasfaseranschlussdose verbindet, selbst beim Wegnehmen von einem Wandmontageplatz, von dieser Glasfaserdose nicht getrennt werden muss und somit das sie identifizierende Beschriftungselement während der gesamten Installationszeit unverlierbar verbunden bleibt.

Mit Vorteil ist die Gehäuseabdeckung der erfindungsgemässen Glasfaseranschlussdose entweder als eine Abdeckplatte und ein Abdeckrahmen oder als ein innerer Deckel und ein äusserer Deckel ausgebildet, wobei Neuinstallationen mit fabrikneuen Installationsgeräten bevorzugt mittels Abdeckplatte und Abdeckrahmen ausgestattet werden können und bereits bestehende Installationen mit einem inneren Deckel ergänzend verschlossen werden können und lediglich ein neuer äusserer Deckel zum Einsatz gelangt, der die frühere Installation vollständig überdeckt. Konsequenterweise ist die vorliegende Erfindung sowohl für Neuinstallationen schätzenswert als auch für ein Retrofit bestehender Installationen.

Bei einer vorteilhaften Ausführungsform der Erfindung ist vorgesehen, dass das erste Befestigungsmittel für die Abdeckplatte mit Abdeckrahmen als eine Schraube ausgebildet ist. Eine weitere vorteilhafte Ausführungsform sieht vor, dass das erste Befestigungsmittel für den inneren Deckel entweder als eine Schraube ausgestaltet sein kann oder als ein Rastelement.

Weitere vorteilhafte Ausführungsformen gemäss der Erfindung werden hinreichend in der nachfolgenden, ausführlichen Figurenbeschreibung gewürdigt.

### Kurze Beschreibung der Zeichnungen

Im Folgenden wird die Erfindung anhand von Figuren beispielhaft erläutert. Gleiche Gegenstände sind in den Figuren grundsätzlich mit gleichen Bezugszeichen bezeichnet. Es zeigen rein schematisch die
- Fig. 1: eine Glasfaseranschlussdose gemäss der vorliegenden Erfindung mit einer Abdeckplatte und einem Abdeckrahmen;
- Fig. 2: eine Ausführungsform der erfindungsgemässen Glasfaseranschlussdose gemäss Fig. 1;
- Fig. 3: eine weitere Ausführungsform der erfindungsgemässen Glasfaseranschlussdose mit einem inneren und einem äusseren Deckel; und die
- Fig. 4: eine weitere Ausführungsform der erfindungsgemässen Glasfaseranschlussdose gemäss Fig. 3.

### Wege zur Ausführung der Erfindung

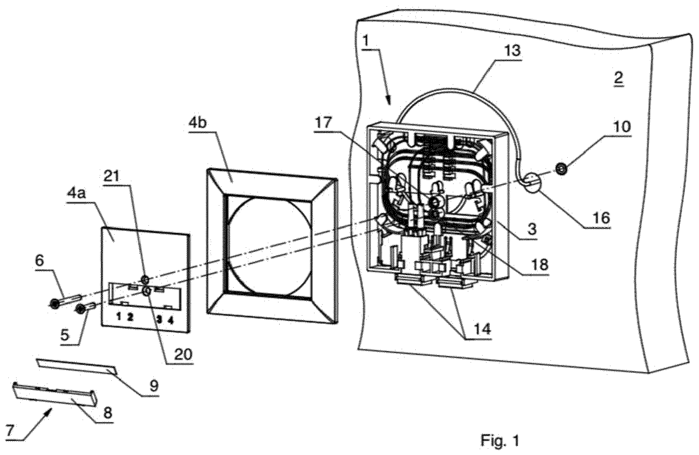

Fig. 1 zeigt die erfindungsgemässe Glasfaseranschlussdose 1 in einer Explosionsdarstellung an einem Wandmontageplatz 2. Diese Glasfaseranschlussdose 1 umfasst einen zum Wandmontageplatz 2 hin zugewandten Gehäuseteil 3 und sie wird mittels einer Gehäuseabdeckung 4a, 4b in Form einer Abdeckplatte 4a und eines Abdeckrahmens 4b verschlossen. Der Wandmontageplatz weist eine Wandöffnung 16 auf, aus welcher eine Glasfaserreserve 13 herausragt, die mit der Glasfaseranschlussdose 1 verbunden ist und somit den Glasfaseranschluss für ein Gebäude über einen ersten und einen zweiten Stecker 14 am Gehäuseteil 3 bereitstellt. Ferner weist der Wandmontageplatz 2 einen Dübel 10 auf, der -wie im Folgenden zu beschreiben sein wird- die erfindungsgemässe Glasfaseranschlussdose 1 am Wandmontageplatz fixiert.

Mit einem ersten Befestigungsmittel 5 in Form einer Schraube 5 wird durch eine erste Durchgangsbohrung 20 in der Abdeckplatte 4a diese Abdeckplatte 4a und der zugehörige Abdeckrahmen 4b am Gehäuseteil 3, welches ein Gewinde 18 aufweist, mit diesem verschraubt, und zwar bevor die Glasfaseranschlussdose 1 am Wandmontageplatz 2 angebracht wird. Mit einem zweiten Befestigungsmittel 6, ebenfalls in Form einer Schraube 6, wird die verschlossene Glasfaseranschlussdose 1 mit dem Dübel 10 am Wandmontageplatz verschraubt, und zwar durch eine zweite Durchgangsbohrung 21 in der Abdeckplatte 4a, dann durch den Abdeckrahmen 4b und durch eine Durchgangsbohrung 17 im Gehäuseteil 3 bis hin zum Dübel 10. Das erste Befestigungsmittel 5 wird durch eine Beschriftungseinrichtung 7, umfassend ein Beschriftungsfenster 8 und ein Beschriftungselement 9 abdeckt, womit dieses erste Befestigungsmittel 5 an der erfindungsgemässen Glasfaseranschlussdose 1 dann versteckt angeordnet ist und lediglich das zweite Befestigungsmittel 6 aussen an der Glasfaseranschlussdose 1 sichtbar und damit bedienbar ist.

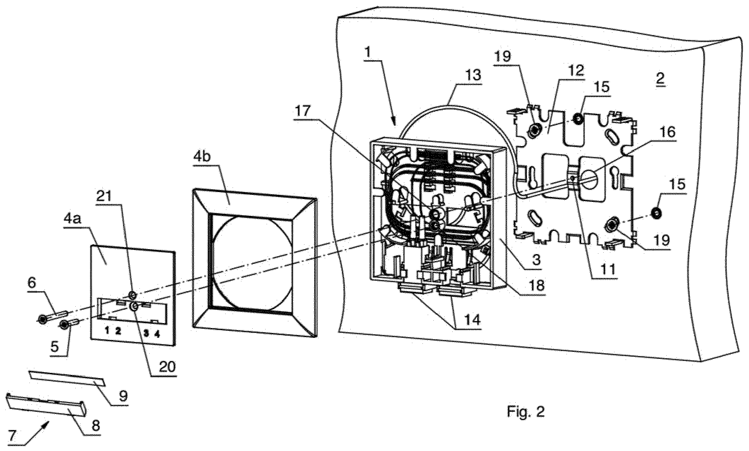

Fig. 2 offenbart eine Ausführungsform der Erfindung nach Fig. 1 mit dem Unterschied, dass die Glasfaseranschlussdose 1 nicht unmittelbar am Wandmontageplatz 2 angeordnet ist, sondern mittelbar über eine zwischengelagerte Befestigungsplatte 12 am Wandmontageplatz 2 fixiert wird. Hierfür ist die Befestigungsplatte 12 mittels einer Schraube 19 an einem Dübel 15 des Wandmontageplatzes 2 befestigt, wobei die Befestigungsplatte 12 ein Gewinde 11 aufweist, welches mit dem zweiten Befestigungsmittel 6 zusammenwirkt. Das erste Befestigungsmittel 5 verbindet von aussen die geschlossene Glasfaseranschlussdose 1 durch die zweite Durchgangsbohrung 21 an der Abdeckplatte 4a, durch den Abdeckrahmen 4b und die Durchgangsbohrung 17 im Gehäuseteil 3 die Glasfaseranschlussdose 1 mit dem Gewinde 11 der Befestigungsplatte 12, welche am Wandmontageplatz 2 angeordnet ist.

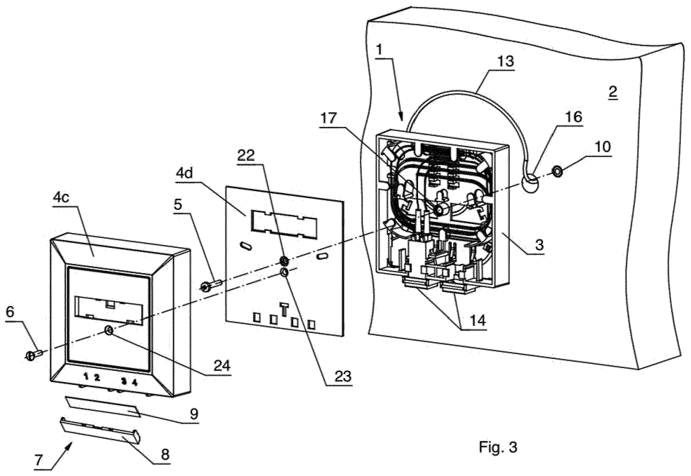

In der Fig. 3 ist eine weitere Ausführungsform der Erfindung dargestellt, wobei sich die Glasfaseranschlussdose 1 gegenüber der Darstellung in Fig. 1 durch die Gehäuseabdeckung 4c, 4d in Form eines äusseren Deckels 4c und eines inneren Deckels 4d unterscheidet. Bei dieser Ausführungsform ist der innere Deckel 4d mittels des ersten Befestigungsmittels 5 durch eine Durchgangsbohrung 22 des inneren Deckels 4d und durch die Durchgangsbohrung 17 des Gehäuseteils 3 mit Dübel 10 verschraubt, wodurch die Glasfaseranschlussdose 1 vollständig verschlossen wird und der Schutz gegen Verschmutzung und Beschädigung erwirkt wird. Anstelle des ersten Befestigungsmittels 5 in Form der Schraube 5 ist denkbar, dieses erste Befestigungsmittel 5 auch in Form einer Rastverbindung zwischen dem Gehäuseteil 3 und dem inneren Deckel 4d auszubilden.

Der äussere Deckel 4c weist eine Durchgangsbohrung 24 auf, durch welche die verschlossene Glasfaseranschlussdose 1 mittels des zweiten Befestigungsmittels 6 an einer Aufnahmebohrung 23 am inneren Deckels 4d mit einem Gewinde verschraubt ist. Des weiteren weist der äussere Deckel 4c die Beschriftungseinrichtung 7 mit einem Beschriftungsfenster 8 und einem Beschriftungselement 9 auf, wobei durch die Beschriftungseinrichtung 7 das innen am inneren Deckel 4d angeordnete erste Befestigungsmittel 5 verdeckt wird und lediglich das zweite Befestigungsmittel 6 nach aussen hin sichtbar und bedienbar ist.

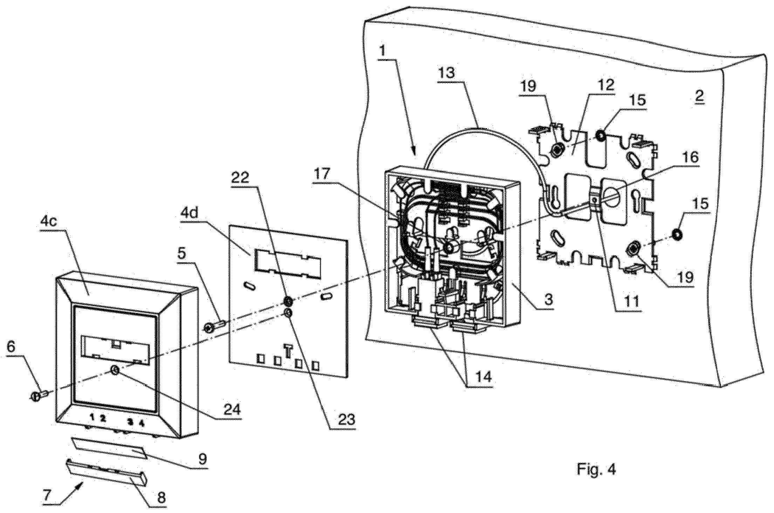

Die Ausführungsform der erfindungsgemässen Glasfaseranschlussdose 1 in Fig. 4 unterscheidet sich von der Ausführungsform in der Fig. 3 lediglich darin, dass die Glasfaseranschlussdose 1 nicht unmittelbar mit dem Wandmontagplatz 2 verbunden ist, sondern mittelbar über die Befestigungsplatte 12, wie sie bereits in Verbindung mit der Fig. 2 erörtert wurde. Hierbei wird zunächst die Befestigungsplatte 12 mit der Schraube 19 an dem Dübel 15 des Wandmontageplatzes 2 verschraubt. Mittels des ersten Befestigungsmittels 5 ist der innere Deckel 4d durch die Durchgangsbohrung 22 an der Befestigungsplatte 12 verschraubt und die geschlossene Glasfaseranschlussdose 1 wird durch den äusseren Deckel 4c abgedeckt, wobei mittels des zweiten Befestigungsmittels 6 der äussere Deckel 4c durch die Durchgangsbohrung 24 in diesem äusseren Deckel 4c an einer Aufnahmebohrung 23 mit Gewinde an dem inneren Deckel 4d verschraubt ist.

Allen erfindungsgemässen Ausführungsformen ist gemeinsam, dass mit dem zweiten Befestigungsmittel 6 im Bedarfsfall die Glasfaseranschlussdose 1 gemäss der Erfindung einstückig und verschlossen temporär von dem Wandmontageplatz 2 lösbar ist, womit der Inhalt der Glasfaseranschlussdose 1 im vom Wandmontageplatz 2 getrennten Zustand gegen Verschmutzung und Beschädigung vollständig geschützt ist. Erst die Trennung der beiden Funktionen, namentlich das Verschliessen der Glasfaseranschlussdose 1 mit dem ersten Befestigungsmittel 5, bzw. die Montage der geschlossenen Glasfaseranschlussdose 1 am Wandmontageplatz 2 mit dem zweiten Befestigungsmittel 6, ermöglicht erfindungsgemäss den vollständigen Schutz des Inhalts der Glasfaseranschlussdose 1, und dies sowohl bei einer Erstinstallation als auch bei einer nachfolgenden Demontage und Wiederinstallation.

### Bezugszeichenliste

- 1: Glasfaseranschlussdose
- 2: Wandmontageplatz
- 3: Gehäuseteil
- 4a, 4b, 4c, 4d: Gehäuseabdeckung
- 5: erste Befestigungsmittel
- 6: zweite Befestigungsmittel
- 7: Beschriftungseinrichtung
- 8: Fensterelement
- 9: Beschriftungselement
- 10: Dübel
- 11: Gewinde
- 12: Befestigungsplatte
- 13: Glasfaserkabelreserve
- 14: Stecker
- 15: Dübel
- 16: Wandöffnung
- 17: Durchgangsbohrung in 3
- 18: Gewinde
- 19: Schraube
- 20: erste Durchgangsbohrung in 4a
- 21: zweite Durchgangsbohrung in 4a
- 22: Durchgangsbohrung in 4d
- 23: Aufnahmebohrung in 4d
- 24: Durchgangsbohrung in 4c

## Patentansprüche

1. Glasfaseranschlussdose (1) für eine Wandmontage an einem Wandmontageplatz (2) in einem Gebäude, wobei die Glasfaseranschlussdose (1) ein dem Wandmontageplatz (2) zugewandtes Gehäuseteil (3) und eine Gehäuseabdeckung (4a, 4b, 4c, 4d) umfasst, wobei erste Befestigungsmittel (5) vorgesehen sind, mit welchen ersten Befestigungsmitteln (5) das Gehäuseteil (3) mit der Gehäuseabdeckung (4a, 4b , 4c, 4d) verschliessbar ist, **dadurch gekennzeichnet, dass** die geschlossene Glasfaseranschlussdose (1) durch den Gehäuseteil (3) und durch die Gehäuseabdeckung (4a, 4b, 4c, 4d) mit einem zweiten Befestigungsmittel (6) von der dem Wandmontageplatz (2) abgewandten Seite der Glasfaseranschlussdose (1) an diesem Wandmontageplatz (2) angeordnet ist.

2. Glasfaseranschlussdose (1) nach Patentanspruch 1, **dadurch gekennzeichnet, dass** das erste Befestigungsmittel (5) durch eine Beschriftungseinrichtung (7) verdeckt angeordnet ist.

3. Glasfaseranschlussdose (1) nach Patentanspruch 2, **dadurch gekennzeichnet, dass** die Beschriftungseinrichtung (7) ein Fensterelement (8) und ein Beschriftungselement (9) umfasst.

4. Glasfaseranschlussdose (1) nach einem der Patentansprüche 1 bis 3, **dadurch gekennzeichnet, dass** die Gehäuseabdeckung (4a, 4b, 4c, 4d) entweder als eine Abdeckplatte (4a) und ein Abdeckrahmen (4b) ausgebildet ist oder als ein innerer Deckel (4d) und ein äusserer Deckel (4c).

5. Glasfaseranschlussdose (1) nach Patentanspruch 4, **dadurch gekennzeichnet, dass** mit dem ersten Befestigungsmittel (5) die Abdeckplatte (4a) und der Abdeckrahmen (4b) den Gehäuseteil (3) verschliessend angeordnet sind, wobei das erste Befestigungsmittel (5) als eine Schraube ausgebildet ist.

6. Glasfaseranschlussdose (1) nach Patentanspruch 2 und 4, **dadurch gekennzeichnet, dass** die Beschriftungseinrichtung (7) an der Abdeckplatte (4a) angeordnet ist.

7. Glasfaseranschlussdose (1) nach Patentanspruch 1 und 5, **dadurch gekennzeichnet, dass** das zweite Befestigungsmittel (6) sichtbar an der Abdeckplatte (4a) angeordnet ist und als Schraube ausgebildet ist.

8. Glasfaseranschlussdose (1) nach Patentanspruch 4, **dadurch gekennzeichnet, dass** mit dem ersten Befestigungsmittel (5) der innere Deckel (4d) den Gehäuseteil (3) verschliessend angeordnet ist, wobei das erste Befestigungsmittel (5) als ein Rastelement oder als eine Schraube ausgebildet ist.

9. Glasfaseranschlussdose (1) nach Patentanspruch 2 und 4, **dadurch gekennzeichnet, dass** die Beschriftungseinrichtung (7) an dem äusseren Deckel (4c) angeordnet ist.

10. Glasfaseranschlussdose (1) nach Patentanspruch 1 und 8, **dadurch gekennzeichnet, dass** das zweite Befestigungsmittel (6) sichtbar an dem äusseren Deckel (4c) angeordnet ist und als eine Schraube ausgebildet ist.

11. Glasfaseranschlussdose (1) nach Patentanspruch 7 oder 10, **dadurch gekennzeichnet, dass** das zweite Befestigungsmittel (6) an einem Dübel (10) des Wandmontageplatzes (2) angeordnet ist.

12. Glasfaseranschlussdose (1) nach Patentanspruch 7 oder 10, **dadurch gekennzeichnet, dass** das zweite Befestigungsmittel (6) an einem Gewinde (11) einer Befestigungsplatte (12) angeordnet ist, welche Befestigungsplatte (12) an dem Wandmontageplatz (2) mit dritten Befestigungsmitteln (13) angeordnet ist.
